# FASCICULE DE BREVET EUROPEEN

(11) **EP 0 456 940 B1**
(45) Date de publication et mention de la délivrance du brevet: **27.07.1994**
(21) Numéro de dépôt: 90401268.9
(22) Date de dépôt: 14.05.1990
(51) Int. Cl.: B30B 9/30, B30B 15/02, B23Q 3/155, B25J 15/04, B65B 27/12

(54) **Dispositif de changement d'outils et machine équipée de ce dispositif**
Vorrichtung zum Wechseln von Werkzeugen und mit dieser Vorrichtung ausgerüstete Maschine
Device for changing tools and machine using this device

(43) Date de publication de la demande: 21.11.1991
(73) Titulaire: ATELIERS SAINT ELOI S.A., F-59960 Neuville en Ferrain (FR)
(72) Inventeur: Joliey, Bernard, F-59170 Croix (FR); Lemaire, Bernard, F-59310 Orchies (FR)
(74) Mandataire: Ecrepont, Robert

(56) Documents cités:
- EP-A- 0 060 638
- CH-A- 668 387

## Description

L'invention se rapporte à un dispositif de changement d'au moins un outil associé de manière démontable selon un axe privilégié à un organe support quant à lui mobile au moins en translation suivant une direction sensiblement parallèle à l'axe d'assemblage avec l'outil.

L'invention concerne un dispositif du type précité, plus particulièrement mais non exclusivement, pour l'équipement d'une machine automatique en vue du pressage puis du cerclage de paquets sensiblement cylindriques de matériau textile qui sont délivrés à la machine en au moins deux diamètres différents.

Par cerclage, on entend tout mode de pose de liens autour du paquet pressé.

Dans les usines de peignage de fibres textiles telles la laine, les fibres sont assemblées en méches de trés grandes longueurs qui sont déposées par gravité en couches spiralées dans des réceptacles chacun globalement cylindriques de révolution et d'axe vertical.

Pour diverses raisons, qui ne seront d'ailleurs pas exposées ici, on donne aux paquets de fibres différents diamètres et couramment des diamétres de 400, 600, 700 ou 800 millimètres.

Les machines de pressage-cerclage qui ont été précédemment évoquées servent précisément à compacter les paquets précités de fibres en vue de leur transport et/ou de leur stockage sous un volume réduit.

A cet effet, les réceptacles, dans lesquels les paquets sont constitués, sont classiquement amenés tour à tour dans au moins une telle machine de pressage-cerclage.

Dans les machines du type précité, on effectue le pressage de chacun des paquets selon un axe sensiblement confondu avec celui longitudinal du réceptacle qui le contient et ce entre, d'une part, un organe qui matérialise le fond du réceptacle et, d'autre part, un outil qui vient prendre appui sur la face libre supérieure du paquet.

A cet effet, l'outil de pressage est associé à un organe mobile en translation selon l'axe longitudinal du réceptacle.

Classiquement, le pressage n'est pas effectué dans le réceptacle car le gonflement diamétral résultant du pressage entraverait l'extraction du paquet comprimé.

Aussi, d'une part, l'organe qui constitue le fond du réceptacle est mobile axialement au dit réceptacle et, d'autre part, aprés que l'outil de pressage ait éte amené au contact de la surface supérieure du paquet, on déplace en synchronisme et dans le même sens les deux éléments antagonistes que sont l'outil de pressage et le fond du receptacle de manière à extraire le paquet de son réceptacle, aprés quoi, en rapprochant les deux éléments antagonistes, on presse le paquet puis au terme du pressage, on pose le cerclase autour du paquet.

Pour les déplacements en translation des éléments antagonistes précités, on met classiquement en oeuvre des vérins opposés.

Pour des critères de rentabilité, les industriels souhaitent que les machines de pressage du type précité puissent traiter les paquets de différents diamétres.

Si l'organe mobile qui constitue le fond du réceptacle est implicitement adapté au diamètre du dit receptacle, en revanche, celui de l'outil de pressage ne l'est pas.

Ainsi, afin que la machine puisse accueillir des réceptacles de différents diamétres pour ne pas devoir changer l'outil de pressage manuellement, de toute évidence, il faut équiper la machine d'un dispositif de changement d'outil agissant de préférence de manière automatique.

Dans le domaine des machines-outils, telles les machines d'usinage, on connait des dispositifs de changement d'outils, par exemple EP-A-0060638.

Les dispositifs de ce type mettent en oeuvre au moins une platine circulaire qui, à rotation indexée autour d'un axe donné, d'une part, porte des moyens de logement d'une pluralité d'outils et, d'autre part, est placée sous l'effet d'un moyen de déplacement en translation dans une direction sensiblement perpendiculaire à son axe de rotation de manière à être mobile entre deux positions dont une position permettant le changement d'outils et une position libérant la zone de travail de l'outil prélevé dans un des moyens de logement d'outils qu'elle comprend.

En fait, le contexte d'utilisation des machines de pressage est tel qu'il faut concilier des paramètres trés limitatifs tels l'encombrement global du dispositif, la vitesse de changement d'outil, la fiabilité du fonctionnement, ce qui interdit l'utilisation directe d'un dispositif de type précité.

Un résultat que l'invention vise à obtenir est justement un dispositif de changement d'outils qui remédie aux inconvénients précités.

Ce résultat sera clairement mis en évidence dans la description.

L'invention a pour objet un dispositif de changement d'outils selon le texte de la revendication 1.

L ' invention sera bien comprise à l'aide de la description ci-aprés faite à titre d'exemple non limitatif en regard du dessin ci-annexé qui représente schématiquement :

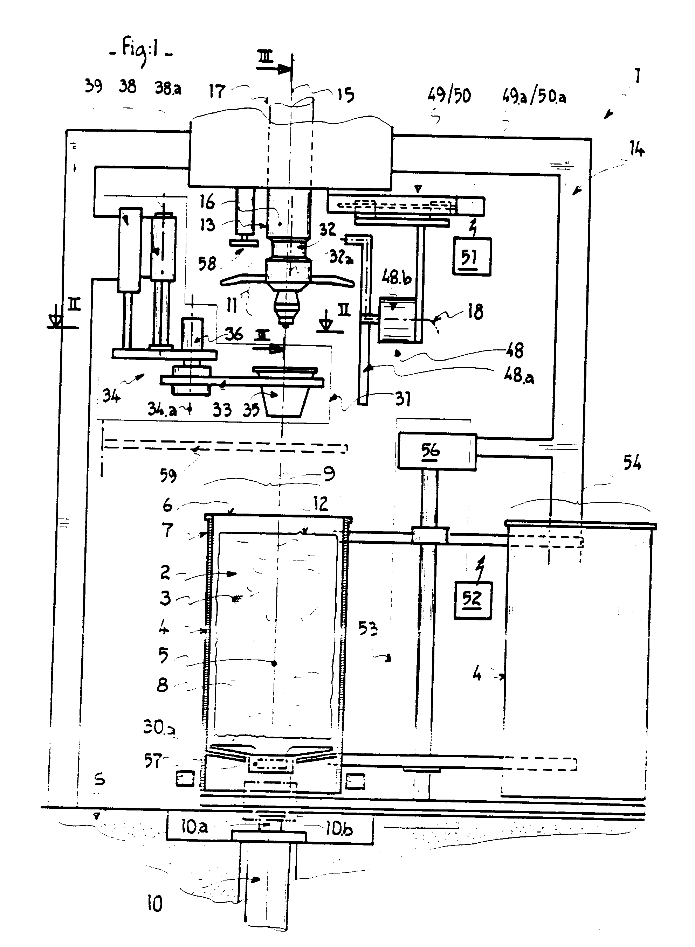

- figure 1 : une vue de face d'une machine équipée du dispositif de l'invention,

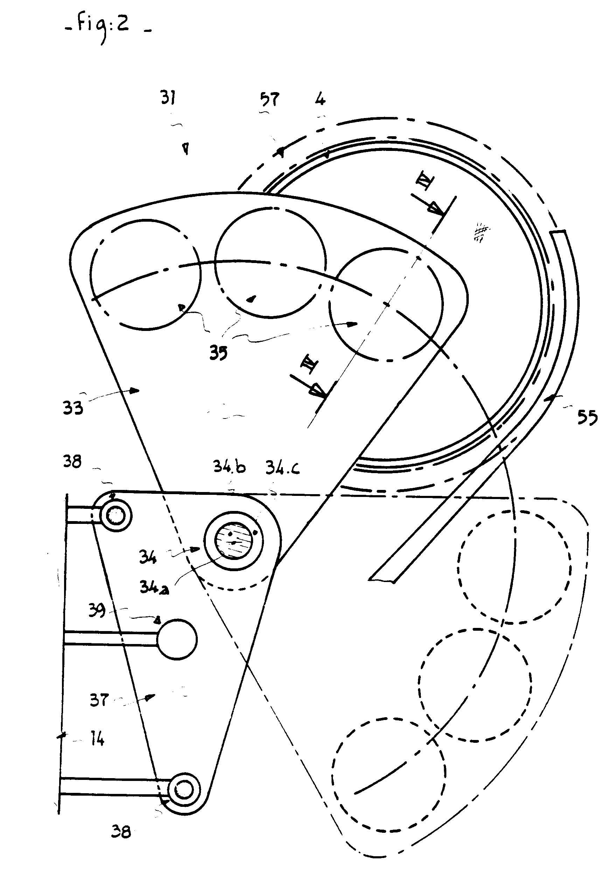

- figure 2 : une vue selon II-II de la figure 1,

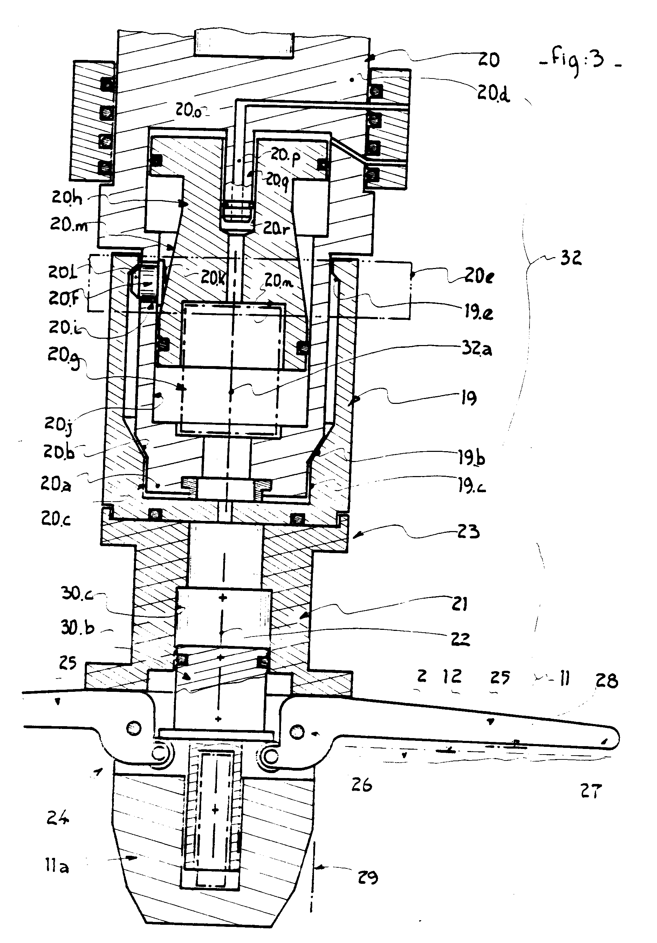

- figure 3 : à plus grande échelle, une vue selon III-III de la figure 1,

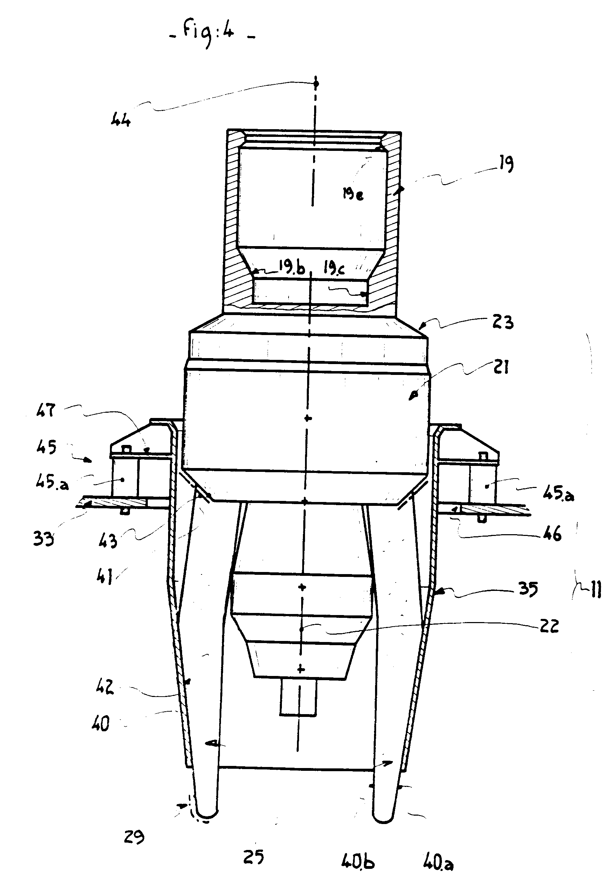

- figure 4 : également à plus grande échelle, une vue selon IV-IV de la figure 2.

En se reportant au dessin, on voit précisément mais non limitativement, une machine 1 en vue du pressage puis du cerclage de paquets 2 sensiblement cylindriques de matériau textile 3 qui sont délivrés à la machine en au moins deux diamètres différents et, par exemple, en trois diamètres différents.

Tel que cela apparaît sur le dessin, les paquets 2 de matériau textile 3 sont délivrés à la machine 1, chacun contenu dans un réceptacle 4 sensiblement cylindrique de révolution qui, d'une part, est orienté avec son axe longitudinal 5 approximativement vertical et, d'autre part, comprend une ouverture 6 à sa partie supérieure 7.

Classiquement, chaque réceptacle comprend un fond 8 qui est mobile axialement au dit réceptacle, pour, comme cela a été expliqué précédemment, permettre l'extraction du paquet de matériau préalablement à son pressage.

En effet, la machine comprend, au poste 9 où doit s'effectuer notamment le pressage qui de ce fait est dit poste de pressage 9, un moyen 10 de déplacement en translation du fond 8 du réceptacle au moins jusqu'au niveau de l'ouverture supérieure 6 du dit réceptacle.

Par exemple, le moyen 10 de déplacement évoqué consiste en un vérin à double effet dont l'extrémité 10a de la tige est associée avec le fond 8 par un moyen d'accouplement 10b à verrouillage commandé.

Quoiqu'il en soit, la machine comprend au moins un outil 11 destiné à être amené en contact avec la face libre supérieure 12 du paquet 2 de matériau contenu dans chaque réceptacle qui est amené au poste de pressage.

Cet outil de pressage 11 est associé à un organe 13 mobile en translation par rapport au bâti 14 de la machine et ce selon un axe 15 approximativement confondu avec celui longitudinal 5 du réceptacle situé au poste de pressage.

Par exemple, l'organe 13 évoqué est constitué par l'extrémité de la tige 16 d'un vérin à double effet 17.

Tel que cela a été expliqué dans l'état de la technique, chaque paquet pressé doit être cerclé en position axialement comprimée notamment entre l'outil de pressage 11 et le fond 8 du réceptacle.

Pour permettre la tenue optimale des liens ou cerclages 18 qui sont posés, lors du pressage, on cherche à donner aux faces du paquet une forme la plus régulière possible.

A cet effet, l'outil qui doit venir au contact de la face libre 12 du paquet 2 a classiquement dans un plan orthogonal à l'axe 5 du réceptacle, d'une part, un diamètre sensiblement inférieur à celui intérieur du dit réceptacle et, d'autre part, une surface la plus continue possible.

Comme actuellement, on ne sait pas concevoir d'outil 11 de pressage dont le diamètre peut être ajusté dans de larges proportions, par exemple entre 400 et 800 millimètres, il faut prévoir le changement d'outil à chaque fois que l'on doit traiter un paquet de matériau dont le diamètre diffère de celui précédemment traité.

Pour permettre ce changement, l'outil et l'organe qui le supporte sont évidemment liés par des éléments d'assemblage complémentaires démontables 19, 20.

Dans le domaine du pressage puis du cerclage de paquets de matériau textile :
- pour constituer tant le fond 8 du réceptacle que l'outil de pressage 11 précité, il est connu d'utiliser un ensemble mécanique 11 qui comprend essentiellement :
- un corps central 21 d'enveloppe globalement cylindrique de révolution, d'axe longitudinal 22 et qui, à l'une 23 de ses extrémités 23, 24, porte un élément d'assemblage démontable 19 avec un élément complémentaire 20 quant à lui porté par l'organe support 13,
- associée à l'extrémité opposée 24 du dit corps, une pluralité de bras longilignes 25 qui, d'une part, sont articulés notamment par l'une 26 de leurs extrémités 26, 27 dans des plans sensiblement radiaux à l'axe longitudinal 22 du corps et angulairement régulièrement répartis autour de cet axe et, d'autre part, mobiles entre deux positions 28, 29 dont au moins une position extréme 28, dite de pressage, dans laquelle ils s'étendent dans un plan approximativement orthogonal à l'axe longitudinal 22 du corps 21 et une autre position 29, dite de repos, dans laquelle ils s'étendent globalement parallélement au même axe longitudinal et notamment au delà de l'extrémité du corps à laquelle ils sont articulés,
- l'ensemble mécanique destiné à constituer le fond du réceptacle et qui est au moins partiellement logé dans le corps cylindrique comprenant un moyen 30a de maintien élastique des bras en position de pressage et,
- l'ensemble mécanique destiné à constituer l'outil de pressage comprenant un moyen 30b, d'une part, de commande des bras au moins de la position de repos vers la position de pressage et, d'autre part, de maintien des bras dans cette position de pressage.

Eventuellement, lorsque le paquet de matériau comprend un alésage axial, le corps de l'outil est, à son extrémité libre, prolongé par un nez 11a de centrage du paquet de matériau préalablement au pressage.

Egalement, la hauteur de ce nez 11a permet de limiter le pressage du paquet.

Tel que cela apparaît au dessin, la machine représentée comprend au moins un dispositif 31 de changement des outils de pressage 11.

Conformément à l'invention, ce dispositif de changement d'outils comprend, en combinaison :
- au moins deux outils de pressage 11, par exemple de dimensions différentes, d'une part, qui consistent chacun en un ensemble mécanique du type précité c'est à dire à corps central 21 et à bras 25 articulés et, d'autre part, dont l'élément d'assemblage 19 réalise avec celui 20 complémentaire porté par l'organe support 13, un moyen 32 d'assemblage à verrouillage commandé pour l'assemblage selon un axe 32a approximativement parallèle à celui 15 de translation du dit organe support 13 lors du pressage,
- au moins une platine 33 articulée au moins indirectement sur le bâti 14 de la machine par un moyen 34 prévu à cet effet et ce selon un axe 34a sensiblement parallèle à celui 32a d'assemblage prédéfini, cette platine :
   . d'une part, portant en nombre au moins égal à celui des outils 11, des moyens 35 de logement, chacun d'un des dits outils 11 avec ses bras 25 en position de repos 29 et son corps 21 dans une position semblable à celle qu'il doit avoir lors de l'assemblage avec l'organe support selon l'axe 32a d'assemblage, lesquels moyens 35 de logement ont une situation par rapport à l'axe d'articulation et une position angulaire autour de cet axe telles que, par articulation de la platine, chacun des moyens 35 de logement peut être amené en vis à vis de l'organe support 13 pour permettre le dépôt et/ou la préhension d'un outil 11 selon l'axe d'assemblage 32a défini et,
   . d'autre part, étant à cet effet associée à au moins un moyen 36 commandé de déplacement autour de son axe d'articulation 34a, ce moyen est indexé de manière à au moins soit, sélectivement, présenter chacun des moyens de logement en vis à vis de l'organe support, soit effacer la platine pour autoriser le fonctionnement du poste de pressage 9.

Tel que cela apparaîtra plus aprés dans la description, pour peu que l'on dispose judicieusement les diverses parties mécaniques considérées, la particularité technique qui vient d'être évoquée va permettre d'obtenir le résultat essentiel visé par l'invention c'est à dire concilier les impératifs que sont l'encombrement minimal du dispositif, sa fiabilité de fonctionnement, la rapidité de changement d'outils.

De préférence, d'une part, la platine 33 est portée par un élément 37 sur lequel elle s'articule par le moyen 34 à cet effet, selon l'axe d'articulation 34a défini et ce sous l'influence du moyen 36 de déplacement commandé également défini et, d'autre part, cet élément 37 est non seulement associé au bâti 14 de la machine par un moyen 38 de guidage en translation selon un axe 38a approximativement parallèle à celui d'assemblage 32a de l'outil avec l'organe support d'outil, mais également placé sous l'influence d'un moyen 39 de déplacement commandé selon l'axe 32a considéré, ce moyen ayant une amplitude de déplacement au moins suffisante pour permettre, tant l'assemblage avec l'organe support 13 de tout outil de pressage 11 du type précité porté par l'un des moyens 35 de logement de la platine 33 qui se trouve en vis à vis de l'organe support 13 que, au terme de cet assemblage, le dégagement total de l'outil 11 du moyen de logement 35 qui l'a porté de manière à autoriser l'effacement de la platine 33 du poste de pressage 9.

Ainsi, le dispositif de changement d'outil du type précité n'occupe qu'un volume à peine plus important que celui de l'ensemble des outils qu'il comporte.

Compte tenu des moyens qu'il met en oeuvre, il peut facilement être associé à une machine existante, sans modification notable de son bâti, puisque généralement les machines du type précité comportent chacune un bâti comprenant essentiellement un socle et un plateau supérieur entre lesquels sont interposées des colonnes qui dégagent largement l'accés aux organes de pressage.

De plus, le dispositif de changement d'outil considéré est fiable puisqu'il ne met en oeuvre que trés peu d'éléments mécaniques et il est également précis puisque pratiquement seule une indexation angulaire est requise lors de l'articulation de la platine.

En fait, les moyens 38, 39 de guidage et de déplacement en translation précités ne sont pas strictement nécessaires car l'organe 13 support d'outil 11 est mobile en translation et pourrait donc venir chercher et/ou déposer tout outil 11 dans un moyen 35 de logement situé en vis à vis.

Toutefois, cette particularité technique simplifie considérablement le circuit de commande du dit organe support 13 qui consiste en l'extrémité de la tige d'un vérin à double effet.

De plus, si le moyen 39 de déplacement en translation de la platine consiste en un vérin, sa section étant objectivement moindre que celle du vérin 17 de pressage, la vitesse de déplacement de son piston est largement supérieure si l'on utilise la même source de fluide sous pression pour le commander, ce qui a une incidence notable sur la durée du cycle de changement d'outil.

Par exemple, tel que cela est représenté, le moyen 38 de guidage en translation de la platine se compose quant à lui d'une pluralité de colonnes de guidage à manchon à billes, les colonnes étant solidaires du bâti et les manchons de l'élément porteur 37.

Le moyen 34 d'articulation de la platine comprend par exemple un arbre épaulé 34b qui, solidaire de la platine, s'appuie et se guide dans un fourreau 34c solidaire de l'élément porteur 37 lié au bâti 14.

Bien que cela n'apparaisse pas de manière flagrante, le moyen 36 de déplacement commandé de la platine autour de l'axe d'articulation 34a consiste avantageusement en un moto-réducteur porté par l'élément 37 sur lequel la platine s'appuie et qui entraîne au moins indirectement un pignon solidaire de l'arbre du moyen d'articulation de la dite platine 33.

Cette platine 33 est de préférence constituée par une plaque en forme de secteur circulaire dont le sommet coopère avec le moyen 34 d'articulation et sur laquelle sont juxtaposés notamment sensiblement selon un arc de cercle, les moyens 35 de logement des outils de pressage.

Selon une réalisation préférée l'invention, chacun des moyens 35 de logement et chacun des outils 11 de pressage 13, notamment dans leur partie destinée à coopérer avec un moyen de logement 35, comprennent des portées 40 à 43 complémentaires qui définissent au moins un axe dit de centrage 44 sensiblement confondu avec celui 22 longitudinal d'un corps 21 d'outil et assurent un maintien stable de l'outil en position d'assemblage avec l'organe support.

Conformément à une autre réalisation préférée de l'invention, chaque moyen de logement 35 est associé à la platine 33 par le biais d'au moins un moyen 45 d'absorption élastique des déplacements qui lui sont imprimés lors de l'assemblage et/ou du dépôt d'un outil, c'est à dire des déplacements résultant d'un éventuel défaut de positionnement du moyen considéré par rapport à l'organe 13 support d'outil et/ou de ceux pouvant résulter de la chute d'un outil dans ce moyen de logement.

Par exemple, chaque moyen 35 de logement comprend un corps globalement tubulaire destiné à loger au moins partiellement l'outil et dans lequel corps sont agencées les portées 42, 43 complémentaires à celles 40, 41 de l'outil et ce corps est librement engagé dans une découpe 46 prévue dans la platine 33 et prend appui sur cette dernière par le moyen 45 d'absorption élastique.

Le moyen 45 d'absorption est par exemple constitué d'une pluralité de blocs amortisseurs 45a radialement répartis interposés entre une collerette 47 solidaire du corps du moyen de logement et une face en vis à vis de la platine 33.

De préférence, au moins certains des bras 25 de chaque outil comportent au moins une surface 40a qui, globalement opposée à celle 40b qui doit venir au contact du matériau à presser, constitue, en position de repos des bras, une portion d'au moins l'une des portées 40, 41 que comprend l'outil.

Cette particularité technique permet de contraindre les bras en position repos et donc d'éviter tout incident dû au déplacement des bras par inertie notamment lors de l'articulation de la platine.

Par exemple, les surfaces 40a précitées déterminent chacune une portion de surface conique 40 de révolution axée sur l'axe longitudinal du corps de l'outil et, pour coopérer avec ces portions 40a, le corps du moyen de logement comprend une portée conique complémentaire 42 quant à elle sensiblement continue.

Si les portées coniques précitées 40, 42 sont insuffisantes pour maintenir l'outil dans la position souhaitée, on prévoit sur le corps de l'outil au moins une autre portée conique 41 et, sur le corps du moyen de logement, au moins une autre portée conique complémentaire 43.

En fait, diverses solutions sont possibles pour constituer les portées complémentaires 40 à 43 de chaque outil et de son moyen de logement et l'homme de l'art est à même de les concevoir.

En ce qui concerne le moyen d'assemblage 32 réalisé par les éléments d'assemblage 19, 20 complémentaires, d'une part, l'élément 20 d'assemblage associé à l'organe support 13 consiste en un arbre 20 dont l'extrémité opposée 20a présente au moins une portée 20b, 20c de centrage et d'appui longitudinal pour l'élément d'assemblage complémentaire 19 associé à l'outil, cet élément d'assemblage consistant quant à lui en un fourreau destiné à s'emboîter sur l'arbre et qui au niveau de son extrémité destinée à être associée à l'outil, comprend intérieurement au moins une portée 19b, 19c complémentaire à celles 20b, 20c de l'arbre et d'autre part, l'arbre 20 comporte au niveau de son extrémité 20d associée à l'organe support, au moins un moyen 20e radialement expansible contre une portée conique 19e réalisée dans le fourreau et orientée pour induire le verrouillage de l'assemblage, c'est à dire le maintien en appui des portées complémentaires 19b, 19c, 20b, 20c du fourreau 19 et de l'arbre 20.

Tel que cela apparaîtra sur le dessin, le vérin 17 est orienté sensiblement verticalement avec l'extrémité 13 de la tige 16 tournée vers le sol S et donc l'outil 11 qu'elle porte est soumis à la gravité.

Par sécurité, le moyen d'assemblage 32 doit donc préserver la liaison entre l'outil 11 et l'extrémité de la tige en l'absence d'énergie d'alimentation de la machine 1.

A cet effet, le moyen 20e radialement expansible comprend, d'une part, une pluralité de pièces 20f d'apui sur la portée conique 19e du fourreau 19, ces pièces étant énergiquement sollicitées au moins indirectement par au moins un organe élastique 20g dans leur direction d'application sur la portée conique 19e précitée et, d'autre part, au moins un organe moteur 20h commandé dont l'action est opposée à celle de chaque organe élastique 20g de manière à permettre au moins la rétraction du moyen 20e expansible sous l'effet du déplacement de l'outil que tend à induire la gravité.

Cette particularité technique permet donc d'obtenir le resultat recherché puisque le verrouillage de l'outil en position assemblée est induit par un organe élastique.

De préférence, l'arbre 20 comprend :
- des alésages 20i disposés radialement à l'arbre et dans chacun desquels coulisse une pièce 20f d'appui sur la portée conique 19e,
- un alésage axial 20j, d'une part, dans lequel les alésages radiaux 20i débouchent pour y présenter l'extrémité 20k de chaque pièce d'appui 20f opposée à celle 20l qui coopère avec la portée conique 19e du fourreau 19 et d'autre part qui loge au moins un piston 20h comportant quant à lui :
   . au moins une portée conique 20m orientée pour coopérer avec l'extrémité 20j de chacune des pièces d'appui 20f qui fait saillie dans l'alésage 20 axial de manière à les solliciter dans leur direction d'application contre la portée 19e du fourreau,
   . au moins deux faces opposées 20n, 20o dont une qui reçoit en permanence l'action d'un organe élastique 20g en vue de solliciter les pièces d'appui 20f dans leur direction d'application contre la portée du fourreau 19 et une autre qui est à même de recevoir l'action d'un fluide sous pression en vue de permettre la libération des mêmes pièces d'appui 20f.

Tel que cela a été évoqué l'outil de pressage 11 comprend un moyen 30b de commande des bras 25 entre la position de repos et la position de pressage et de maintien élastique dans cette dernière position.

Classiquement ce moyen 30b de commande consiste en un piston 30b qui, déplacé dans un alésage 30c du corps 21 de l'outil, sous l'action d'un fluide sous pression, agit sur l'extrémité des bras 25 voisine de leur articulation au corps d'outil de manière à induire le maintien des dits bras en position de pressage.

Pour permettre l'acheminement du fluide sous pression qui doit commander le piston 30b moteur des bras 25 de l'outil 11, le moyen d'assemblage 32 comprend au moins un canal 20p.

Tel que cela est représenté le canal 20p débouche dans la chambre de commande du piston 30b de l'outil 11.

De préférence, le canal 20p est aménagé principalement axialement au moyen d'assemblage 32 et donc à travers le piston 20h de verrouillage du moyen d'assemblage 32 et il ne doit donc pas interférer avec le circuit de fluide sous pression qui doit commander ce piston.

A cet effet, le piston 20h du moyen d'assemblage 32 est, au moins au niveau de sa face 20o qui doit recevoir l'action d'un fluide sous pression, traversé par une broche 20q elle-même traversée par le canal 20p d'acheminement du fluide sous pression vers l'outil 11, laquelle broche est, d'une part, portée par la face 20n de l'alésage axial 20j tournée vers la face considérée 20n du piston et, d'autre part, reliée de manière étanche et montée de manière coulissante sur une longueur au moins égale à l'amplitude de déplacement du piston considéré dans un alésage 20r raccordé au canal 20p d'acheminement d'un fluide sous pression vers l'outil 11 de pressage.

L'ensemble de ces dernières dispositions techniques évite l'établissement d'une connexion entre le circuit de fluide sous pression de l'outil et une conduite par ailleurs reliée à une source de fluide sous pression.

Bien que cela n'ait pas été évoqué, le paquet axialement comprimé doit, lors du cerclage, être pas à pas entraîné autour de son axe longitudinal pour permettre la pose du cerclage 18 dans des plans globalement parallèles au dit axe longitudinal.

A cet effet, le moyen d'assemblage 32 est d'une part associé à l'extrémité de la tige du vérin par le biais d'un moyen de guidage en rotation et évidemment d'arrêt en translation selon un axe approximativement confondu avec celui de translation du vérin et d'autre part reçoit l'action d'un moyen de commande en rotation fractionnée.

Ces moyens connus en tant que tels n'ont pas été précisément représentés mais, par exemple, on conçoit que le moyen de guidage soit par exemple une butée à billes.

Quant au moyen de commande de la rotation pas à pas, il comprend par exemple une couronne associée à l'arbre 19 du moyen d'assemblage et un pignon quant à lui associé à un arbre de commande en rotation.

L'alimentation des circuits de fluide sous pression internes à l'arbre du moyen d'assemblage est notamment réalisée par le biais de joints tournants.

Tel que cela apparaît au dessin, la machine équipée du dispositif 31 de changement d'outil 11 selon l'invention comprend un ensemble mécanique 48 de cerclage des paquets, par exemple par ligaturage à l'aide d'une ficelle 18.

Classiquement cet ensemble de ligaturage comporte un bras 48a d'entraînement de la ficelle autour du paquet de matériau pressé.

Egalement, cet ensemble comprend une tête 48b dite de nouage et qui, précisément, noue entre elles les deux extrémités de la ficelle enroulée autour du paquet, et ce évidemment lorsque l'enroulement est terminé.

Conformément à un aspect préféré de l'invention, pour permettre d'adapter non seulement la position du bras d'entraînement 48a mais également celle de la tête de nouage 48b en fonction du diamètre du paquet pressé, l'ensemble de ligaturage 48, d'une part, est supporté par le bâti de la machine par au moins deux moyens 49, 50 de guidage en translation selon des directions sensiblement perpendiculaires et ce dans un plan globalement orthogonal à l'axe de translation 15 du vérin 17 support d'outil 11 et, d'autre part, à chacun des moyens de guidage précités est associé un moyen moteur 49a, 50a commandé en vue du déplacement de l'ensemble de ligaturage selon chacune des directions définies, ces moyens moteurs étant asservis par un moyen 51 de commande quant à lui piloté par un moyen 52 de détection du diamétre du paquet pressé.

Les divers moyens 49 à 52 précités n'ont pas été représentés en détail mais l'homme de l'art est à même de concevoir ces moyens.

Avantageusement, le dispositif de changement d'outil est disposé sensiblement symétriquement à l'ensemble mécanique de cerclage par rapport à l'axe de translation 15 de l'organe support.

Suivant une variante préférée de l'invention, la machine précitée comprend également un moyen 53 d'acheminement des réceptacles vers le poste de pressage 9.

Par exemple, le moyen 53 d'acheminement consiste en un plateau tournant dans un plan sensiblement horizontal, entre le poste de pressage 9 et le poste d'accueil 54 des réceptacles qui comprend la machine et qui lui est diamétralement opposé.

Le moyen 52 de détection du diamètre du paquet pressé est par exemple un moyen de détection du diamètre du réceptacle duquel le paquet de matériau va être extrait et avantageusement ce moyen est situé sur le trajet des réceptacles entre le poste d'accueil 54 et le poste de pressage 9 afin que, pendant l'éjection du réceptacle vidé de son contenu par un moyen 55 à cet effet , on puisse s'il y a lieu anticiper sur le changement d'outil.

Evidemment, le plateau tournant 53 est équipé d'un moyen moteur 56 commandé d'entraînement en rotation.

Non limitativement, on décrit ci aprés un cycle de fonctionnement de la machine équipée du dispositif d'assemblage de l'invention et des divers amménagements qui viennent d'être exposés.

Pour faciliter la compréhension, le cycle considéré débute aprés que le moyen 55 prévu à cet effet ait éjecté le réceptacle du paquet qui a été traité.

A ce stade, la tige du vérin 10 qui doit coopérer avec le fond 8 du réceptacle 4 est escamotée en position rétractée de manière à permettre le transfert au poste de pressage d'un réceptacle contenant un paquet de matériau à presser par rotation du plateau 53.

Si l'outil de pressage 11 qui équipe l'organe support qui vient d'être, s'il y a lieu, être libéré du paquet de matériau pressé et ligaturé ne corespond pas au diamètre du réceptacle transféré au poste de pressage, on change l'outil pour le remplacer par un outil de diamètre adapté au paquet considéré.

A cet effet, aprés avoir amené les bras de l'outil en place sur l'organe support en position repos, le moyen 35 de logement réservé à cet outil est amené par articulation de la platine en vis à vis du dit outil, puis, la platine est translatée vers le haut de manière à emboîter ce dit moyen sur l'outil considéré;

A ce stade, le déverrouillage du moyen d'assemblage est commandé puis, la platine est translatée en position basse, aprés quoi, par articulation de la dite platine, l'outil adapté au pressage du paquet situé au poste de pressage est amené à l'aplomb de l'organe support.

Pour l'assemblage de cet outil, la platine est à nouveau translatée vers le haut puis vers le bas lorsque l'assemblage est réalisé aprés quoi c'est l'effacement total de la dite platine qui est commandé.

A ce stade, la translation du fond du réceptacle situé au poste de pressage peut être commandée pour l'extraction du paquet.

Bien entendu, préalablement à l'extraction, l'organe qui constitue le fond du réceptacle est accouplé à la tige du vérin qui va en commander le déplacement.

Egalement, bien que cela n'ait pas été précisé, le réceptacle est alors énergiquement maintenu sur son plan d'appui par un moyen 57 prévu à cet effet et ce maintien est conservé au moins pendant toute la phase d'extraction du paquet du réceptacle.

Préalablement à l'extraction du paquet de matériau et/ou au moins lorsque la face libre du paquet apparaît dans le plan de l'ouverture du réceptacle, l'outil de pressage est descendu en appui sur la dite face libre.

A ce stade, le pressage peut commencer et de préférence, le déplacement des vérins antagonistes, l'un portant l'outil de pressage, l'autre l'organe qui constitue le fond du réceptacle amène le paquet pressé en position de ligaturage.

Les moyens moteurs associés aux moyens de guidage en translation de l'ensemble de nouage ayant corrigé la position de cet ensemble, le ligaturage peut être effectué.

A l'issue du ligaturage, le vérin qui porte le fond du réceptacle est rétracté et les bras articulés de l'organe qui constitue le fond, pour échapper aux ligatures, contrarient alors l'action du moyen élastique 30a qui les maintient en position dite de pressage.

A ce stade, aprés que le dit fond ait réintégré le réceptacle auquel il est associé le dit réceptacle est évacué.

Bien entendu, l'outil de pressage doit être libéré du paquet pressé-ligaturé et, à cet effet, aprés qu'on ait relaché l'action de maintien de ces bras en position de pressage, on commande l'éjection du paquet au moyen d'un poussoir 58.

Le paquet pressé ligaturé est par exemple recueilli sur une platine 59 préalablement placée au point de chute du paquet.

A l'issue de cette opération, les bras de l'outil de pressage sont soit laissés en position de repos notamment si cet outil doit être échangé, soit rappelé en position de pressage.

Aprés quoi, un nouveau cycle de pressage peut commencer.

## Revendications

1. Dispositif (31) de changement d'au moins un outil (11) associé de manière démontable selon un axe (32a) privilégié notamment dit axe d'assemblage (32a), à un organe support (13) quant à lui mobile au moins en translation suivant une direction (15) sensiblement parallèle dit axe d'assemblage de l'outil, ce dispositif étant notamment associé au bâti (14) d'une machine de pressage (1), l'outil en question comprenant :
- un corps central (21) d'enveloppe globalement cylindrique de révolution, d'axe longitudinal (22) et qui, à l'une (23) de ses extrémités (23, 24), porte un élément d'assemblage démontable (19) avec un élément complémentaire (20) quant à lui porté par l'organe support (13) et avec lequel il réalise un moyen (32) d'assemblage à verrouillage commandé pour l'assemblage selon un axe (32a) approximativement parallèle à celui (15) de translation dudit organe support (13) lors du pressage,
- associée à l'extrémité opposée (24) du dit corps, une pluralité de bras longilignes (25) qui, d'une part, sont articulés notamment par l'une libre (26) de leurs extrémités (26, 27) dans des plans sensiblement radiaux à l'axe longitudinal (22) du corps et angulairement régulièrement répartis autour de cet axe et, d'autre part, mobiles entre deux positions (28, 29) dont au moins une position extréme (28) dite de pressage dans laquelle ils s'étendent dans un plan approximativement orthogonal à l'axe longitudinal (22) du corps (21) et une autre position (29) dite de repos dans laquelle ils s'étendent globalement parallélement au même axe longitudinal et notamment au delà de l'extrémité du corps à laquelle ils sont articulés,
le dispositif comprenant quant à lui, au moins une platine (33) articulée au moins indirectement sur le bâti (14) de la machine par un moyen (34) à cet effet et ce selon un axe (34a) sensiblement parallèle à celui (32a) d'assemblage prédéfini, cette platine :
- d'une part, portant une pluralité de moyens (35) de logement, chacun d'un des dits outils (11) avec son corps (21) dans une position semblable à celle qu'il doit avoir lors de l'assemblage avec l'organe support selon l'axe (32a) d'assemblage, lesquels moyens (35) de logement ont une situation par rapport à l'axe d'articulation et une position angulaire autour de cet axe telles que par articulation de la platine chacun des moyens (35) de logement peut être amené en vis à vis de l'organe support (13) pour permettre le dépôt et/ou la préhension d'un outil (11) selon l'axe d'assemblage (32a) défini et,
- d'autre part, étant à cet effet associée à au moins un moyen (36) commandé de déplacement autour de son axe d'articulation (34a), ce moyen est indexé de manière à au moins soit, sélectivement, présenter chacun des moyens de logement en vis à vis de l'organe support, soit effacer la platine pour autoriser le fonctionnement du poste de pressage (9)
ce dispositif de changement d'outils étant **CARACTERISE** en ce que :
- chaque platine qu'il comprend est constituée par une plaque en forme de secteur circulaire dont le sommet coopère avec le moyen (34) d'articulation et sur laquelle sont juxtaposés, notamment sensiblement selon un arc de cercle, les moyens (35) de logement des outils de pressage,
- chaque moyen de logement d'un outil est conçu pour recevoir un outil avec ses bras (25) en position de repos (29),
- la platine (33) est, d'une part, portée par un élément (37) sur lequel elle s'articule par le moyen (34) à cet effet, selon l'axe d'articulation (34a) défini et ce, sous l'influence du moyen (36) de déplacement commandé également défini et, d'autre part, cet élément (37) est non seulement associé au bâti (14) de la machine par un moyen (38) de guidage en translation selon un axe (38a) approximativement parallèle à celui d'assemblage (32a) de l'outil avec l'organe support d'outil, mais également placé sous l'influence d'un moyen (39) de déplacement commandé selon l'axe (32a) considéré, ce moyen ayant une amplitude de déplacement au moins suffisante pour permettre, tant l'assemblage avec l'organe support (13) de tout outil de pressage (11) du type précité porté par l'un des moyens (35) de logement de la platine (33) qui se trouve en vis à vis de l'organe support (13) que, au terme de cet assemblage, le dégagement total de l'outil (11) du moyen de logement (35) qui l'a porté de manière à autoriser l'effacement de la platine (33) du poste de pressage (9).

2. Dispositif selon la revendication 1 et dans lequel chacun des moyens (35) de logement et chacun des outils (11) de pressage (13), notamment dans leur partie destinée à coopérer avec un moyen de logement (35), comprennent des portées (40 à 43) complémentaires qui définissent au moins un axe dit de centrage (44) sensiblement confondu avec celui (22) longitudinal d'un corps (21) d'outil et assurent un maintien stable de l'outil en position d'assemblage avec l'organe support,
ce dispositif étant **caractérisé** en ce que chaque moyen de logement (35) est associé à la platine (33) par le biais d'au moins un moyen (45) d'absorption élastique des déplacements qui lui sont imprimés lors de l'assemblage et/ou du dépôt d'un outil, c'est à dire des déplacements résultant d'un éventuel défaut de positionnement du moyen considéré par rapport à l'organe (13) support d'outil et/ou de ceux pouvant résulter de la chute d'un outil dans ce moyen de logement.

3. Dispositif selon la revendication 1 ou 2 **caractérisé** en ce que chaque moyen (35) de logement comprend un corps globalement tubulaire destiné à loger au moins partiellement l'outil et dans lequel corps sont agencées les portées (42, 43) complémentaires à celles (40, 41) de l'outil et ce corps est librement engagé dans une découpe (46) prévue dans la platine (33) et prend appui sur cette dernière par le moyen (45) d'absorption élastique.

4. Dispositif selon l'une quelconque des revendications 1 à 3 **caractérisé** en ce qu'au moins certains des bras (25) de chaque outil comportent au moins une surface (40a) qui, globalement opposée à celle (40b) qui doit venir au contact du matériau à presser constitue, en position de repos des bras, une portion d'au moins l'une (40) des portées (40, 41) que comprend l'outil.

5. Dispositif selon l'une quelconque des revendications 1 à 4 **caractérisé** en ce que, d'une part, l'élément (20) d'assemblage associé à l'organe support (13) consiste en un arbre (20) dont l'extrémité opposée (20a) présente au moins une portée (20b, 20c) de centrage et d'appui longitudinal pour l'élément d'assemblage complémentaire (19) associé à l'outil, cet élément d'assemblage consistant quant à lui en un fourreau destiné à s'emboîter sur l'arbre et qui au niveau de son extrémité destinée à être associée à l'outil, comprend intérieurement au moins une portée (19b, 19c) complémentaire à celles (20b, 20c) de l'arbre et d'autre part, l'arbre (20) comporte au niveau de son extrémité (20d) associée à l'organe support, au moins un moyen (20e) radialement expansible contre une portée conique (19e) réalisée dans le fourreau et orientée pour induire le verrouillage de l'assemblage, c'est à dire le maintien en appui des portées complémentaires (19b, 19c, 20b, 20c) du fourreau (19) et de l'arbre (20).

6. Dispositif selon la revendication 5 **caractérisé** en ce que le moyen (20e) radialement expansible comprend, d'une part, une pluralité de pièces (20f) d'appui sur la portée conique (19e) du fourreau (19), ces pièces étant énergiquement sollicitées au moins indirectement par au moins un organe élastique (20g) dans leur direction d'application sur la portée conique (19e) précitée et, d'autre part, au moins un organe moteur (20h) commandé dont l'action est opposée à celle de chaque organe élastique (20g) de manière à permettre au moins la rétraction du moyen (20e) expansible sous l'effet du déplacement de l'outil que tend à induire la gravité.

7. Dispositif selon la revendications 5 ou 6 **caractérisé** en ce que l'arbre (20) comprend :
- des alésages (20i) disposés radialement à l'arbre et dans chacun desquels coulisse une pièce (20f) d'appui sur la portée conique (19e),
- un alésage axial (20j), d'une part, dans lequel les alésages radiaux (20i) débouchent pour y présenter l'extrémité 20k de chaque pièce d'appui (20f) opposée à celle (20l) qui coopère avec la portée conique (19c) du fourreau (19) et d'autre part qui loge au moins un piston (20h) comportant quant à lui :
. au moins une portée conique (20m) orientée pour coopérer avec l'extrémité (20k) de chacune des pièces d'appui (20f) qui fait saillie dans l'alésage (20j) axial de manière à les solliciter dans leur direction d'application contre la portée (19e) du fourreau,
. au moins deux faces opposées (20n, 20o) dont une qui reçoit en permanence l'action d'un organe élastique (20g) en vue de solliciter les pièces d'appui (20f) dans leur direction d'application contre la portée du fourreau (19) et l'autre à même de recevoir l'action d'un fluide sous pression en vue de permettre la libération des mêmes pièces d'appui (20f).

## Patentansprüche

1. Vorrichtung (31) zum Wechseln mindestens eines Werkzeugs (11, das abnehmbar entlang einer bevorzugten Achse (32a), insbesondere der sogenannten Montageachse (32a), einem Trägerelement (13) zugeordnet ist, welches seinerseits zumindest translatorisch in einer im wesentlichen parallelen Richtung (15), der sogenannten Montageachse des Werkzeugs, beweglich ist, wobei die Vorrichtung vor allem dem Rahmen (14) einer Preßmaschine (1) zugeordnet ist, und wobei das in Frage stehende Werkzeug folgendes aufweist:
- einen im großen und ganzen zylinderförmigen Mittelkorpus (21) in Form eines umhüllenden Drehkörpers mit einer Längsachse (22), der an einem (23) seiner Enden (23, 24) ein abnehmbares Montageteil (19) mit einem komplementären Teil (20) trägt, das seinerseits auf einem Trägerelement (13) gelagert ist, mit welchem es eine Einrichtung (32) zur Montage unter Verriegelung bildet, die zur Montage entlang einer zur Translationsachse (15) des Trägerelements (13) beim Preßvorgang in etwa parallelen Achse ansteuerbar ist,
eine dem gegenüberliegenden Ende (24) des Korpus zugeordnete Vielzahl langgestreckter Arme (25), die einerseits insbesondere über ein freies (26) ihrer Enden (26, 27) in Ebenen angelenkt sind, die im wesentlichen radial zur Längsachse (22) des Korpus und in regelmäßigen Abständen um diese Achse verteilt und andererseits zwischen zwei Positionen (28, 29) beweglich sind, von denen zumindest eine die Endstelluns (28), die sogenannte Preßstellung, ist in welcher sie in einer Ebene verlaufen, die in etwa senkrecht zur Längsachse (22) des Korpus (21) verläuft, und die andere Position (29) die sogenannte Ruhelage ist, in welcher sie im wesentlichen parallel zur selben Längs- achse verlaufen und insbesondere über das Ende des Korpus überstehen, an welchem sie angelenkt sind,
wobei diese Vorrichtung ihrerseits mindestens eine zumindest indirekt auf dem Rahmen (14) der Maschine mittels einer hierzu vorgesehenen Einrichtung (34) entlang einer Achse (34a) angelenkte Halteplatte aufweist, die im wesentlichen parallel zur genannten Montageachse (32a) verläuft, wobei die Halteplatte:
- einerseits eine Vielzahl von Lagereinrichtungen (35) trägt; und zwar jeweils eine für eines der Werkzeuge (11) mit dessen Korpus (21) in einer Position ähnlich derjenigen, die beim Zusammenbau mit dem Trägerelement entlang der Montageachse (32a) einzunehmen ist, wobei die Lagereinrichtungen (35) eine Lage bezüglich der Anlenkachse und eine Winkelstellung um diese Achse in der Weise haben, daß durch Anlenkung der Trägerplatte jede der Lagereinrichtungen (35) in eine Stellung gegenüber dem Trägerelement (13) so führbar ist, daß ein Werkzeug (11) entlang der definierten Montageachse (32a) ablegbar und/oder ergreifbar ist,
- und wobei diese Einrichtung andererseits unter entsprechender Zuordnung zu mindestens einer Einrichtung (36), die zur Verlagerung um ihre Anlenkachse (34a) ansteuerbar ist, in der Weise positioniert ist, daß zumindest selektiv jede der Lagereinrichtung gegenüber dem Trägerelement steht oder zumindest die Halteplatte so rückstellbar ist, daß der Betrieb der Preßstation (9) möglich ist,
**DADURCH GEKENNZEICHNET**,
- daß jede darin vorgesehene Halteplatte aus einer Platte in Form eines Kreissektors besteht, deren Spitze mit der Anlenkeinrichtung (34) zusammenwirkt und auf welcher nebeneinander, insbesondere im wesentlichen entlang eines Kreisbogens, die Lagereinrichtungen (35) für die Preßwerkzeuge angeordnet sind,
- daß jede Lagereinrichtung eines werkzeugs zur Aufnahme eines Werkzeugs mit seinen Armen (25) in Ruhelage (29) ausgelegt ist,
- daß die Halteplatte (33) einerseits über ein Element (37) gelagert ist, auf welchem sie über die hierzu vorgesehene Einrichtung (34) entlang der definierten Anlenkachse (34a) unter dem Einfluß der Einrichtung (36) zur ebenfalls definierten gesteuerten Verschiebung angelenkt ist, und andererseits dieses Element (37) nicht nur dem Rahmen (14) der Maschine über eine Einrichtung (38) zur translatorischen Führung entlang einer Achse (38a) zugeordnet ist, die in etwa parallel zur Montageachse (32a) des werkzeugs mit dem Werkzeugträger verläuft, sondern auch unter dem Einfluß einer Einrichtung (39) zur gesteuerten Verlagerung entlang der jeweiligen Achse (32a) steht, wobei diese Einrichtung eine Verschiebungsamplitude aufweist, die zumindest ausreicht, um sowohl die Montage mit dem Trägerelement (13) jedes Preßwerkzeugs (11) der vorgenannten Art, das mittels einer der Lagereinrichtungen (35) der Halteplatte (33) gelagert ist, die sich gegenüber dem Trägerelement (13) befindet, zu ermöglichen, als auch zum Zwecke dieser Montage die völlige Freigabe des Werkzeugs (11) von der Lagereinrichtung (35), von der es getragen wurde, um so die Rückstellung der Halteplatte (33) der Preßstation zu gestatten.

2. Vorrichtung nach Anspruch 1, bei welcher außerdem jede der Lagereinrichtungen (35) und jedes der Preßwerkzeuge (11) insbesondere in ihrem zum Zusammenwirken mit einer Lagereinrichtung (35) bestimmten Abschnitt komplementäre Bereiche (40 bis 43) aufweisen, die mindestens eine Achse, die sogenannte Zentrierachse (44) definieren, welche mit der Längsaches (22) eines Werkzeugkorpus (21) zusammenfällt, und die ein stabiles Halten des Werkzeugs in einer mit dem Trägerelement zusammengebauten Position gewährleisten,
**dadurch gekennzeichnet,** daß jede Lagereinrichtung (35) der Halteplatte (33) durch die Vorspannung mindestens einer Einrichtung (45) zur elastischen Aufnahme von Verlagerungen zugeordnet ist, die sie bei der Montage und/oder Ablage eines Werkzeugs erfährt, d.h. Verlagerungen infolge eines eventuellen Positionierfehlers an der entsprechenden Einrichtung bezüglich des Werkzeugträgerelements (13) und/oder gegebenenfalls infolge des Fallens eines Werkzeugs in diese Lagereinrichtung.

3. Vorrichtung nach Anspruch 1 oder 2, **dadurch gekennzeich****net**, daß jede Lagereinrichtung (35) einen im wesentlichen rohrförmigen Korpus zur zumindest teilweissen Lagerung des Werkzeugs aufweist, in welchem die zu den Bereichen (40, 41) auf dem Werkzeug komplementären Bereiche (42, 43) vorgesehen sind, und daß dieser Korpus frei in einen Ausschnitt (46) eingesetzt ist, der in der Halteplatte (33) ausgebildet ist, und sich auf dieser über die Einrichtung (45) zur elastischen Aufnahme abstützt.

4. Vorrichtung nach einem der Ansprüche 1 bis 3, **dadurch ge****kennzeichnet**, daß zumindest bestimmte unter den Armen (25) jedes Werkzeugs mindestens eine Fläche (40a) aufweisen, die im wesentlichen der Fläche (40b) gegenübersteht welche mit dem zu verpressenden Material in Berührung kommen soll, und die dabei bei Ruhestellung der Arme einen Abschnitt mindestens eines (40) der Bereiche (40, 41) bildet, welche auf dem Werkzeug vorgesehen sind.

5. Vorrichtung nach einem der Ansprüche 1 bis 4, **dadurch ge****kennzeichnet,** daß einerseits das dem Trägerelement (13) zugeordnete Montageelement (20) aus einer Welle (20) besteht, deren gegenüberliegendes Ende (20a) mindestens einen Bereich (20b, 20c) zur Zentrierung und Abstützung in Längsrichtung für das dem Werkzeug zugeordnete komplementäre Montageelement (19) aufweist, wobei dieses Montageelement seinerseits aus einer Hülse besteht, die auf die Welle aufschiebbar ist und in Höhe ihres dem Werkzeug zuzuordnenden Endes im Inneren mindestens einen Bereich (19b, 19c) aufweist, der komplementär zu den Bereichen (20b, 20c) auf der Welle ist, und daß die Welle (20) andererseits in Höhe ihres dem Trägerelement zugeordneten Endes (29d) mindestens eine Einrichtung (20e) aufweist, die gegen einen in der Hülse ausgebildeten konischen Bereich (19e) radial aufweitbar ist, wobei dieser konische Abschnitt so ausgerichtet ist, daß er die Verriegelung bei der Montage herbeiführt, d.h. die Halterung der komplementären Bereiche (19b, 19c, 20b, 20c) auf der Hülse (1) und der Welle (20) in Anlage gegeneinander.

6. Vorrichtung nach Anspruch 5, **dadurch gekennzeichnet**, daß die radial aufweitbare Einrichtung (20e) einerseits eine Vielzahl von stützteilen (20f) auf dem konischen Bereich (19e) der Hülse (19) aufweist, welche kräftig, zumindest indirekt, über mindestens ein elastisches Element (20g) in Anlagerichtung gegen den genannten konischen Bereich (19e) gespannt sind, sowie andererseits mindestens ein ge- steuertes Antriebselement (20h), dessen Wirkrichtung der jedes elastischen Elements (20g) entgegengesetzt ist, so daß zumindest eine Rückziehbewegung der unter der Einwirkung der Verlagerung des werkzeugs, zu dem dieses unter dem Einfluß der Schwerkraft neigt, aufweitbaren Einrichtung (20e) möglich ist.

7. Vorrichtung nach Anspruch 5 oder 6, **dadurch gekennzeich****net,** daß die Welle (20) folgendes aufweist:
- radial an der Welle ausgebildete Bohrungen (20i), in welchen jeweils ein Stützteil (20f) auf dem konischen Bereich (19e) gleitet,
- eine axiale Bohrung (20j), in welche einerseits die radialen Bohrungen (20i) so einmünden, daß sich dort das Ende (20k) jedes Stützteils (20f) befindet, das gegenüber demjenigen (201) liegt, das mit dem konischen Bereich (19c) auf der Hülse (19) zusammenwirkt, und in welcher andererseits mindestens ein Kolben (20h) gelagert ist, der seinerseits folgendes aufweist:
. mindestens einen konischen Bereich (20m), der so ausgerichtet ist, daß er mit dem Ende (20k) jedes Stützteils (20f) zusammenwirkt, das in die axiale Bohrung (20j) vorsteht, so daß die Stützteils in ihre Anlagerichtung gegen den Bereich (19e) der Hülse gespannt werden,
. mindestens zwei gegenüberliegende Flächen (20n, 20o), von denen eine kontinuierlich die Wirkung eines elastischen Elements (20g) zum Spannen der Stützteils (20f) in deren Anlagerichtung gegen den Bereich auf der Hülse (19) übernimmt, und die andere wiederum die Wirkung eines druckbeaufschlagten Strömungsmittels übernimmt, um die Freigabe derselben Stützteile (30f) zu ermöglichen.

## Claims

1. Device (31) for changing at least one tool (11) which is associated, in a manner such that it can be disassembled along a preferred axis (32a), in particular called the assembly axis (32a), with a support member (13) which is itself movable at least by translational movement in a direction (15) substantially parallel to the said assembly axis of the tool, this device being associated in particular with the frame (14) of a pressing machine (1), the tool in question comprising:
- a central envelope body (21) which is overall a cylinder generated by revolution, which has a longitudinal axis (22) and which, at one (23) of its ends (23, 24), carries an assembly element (19) which can be disassembled and has a complementary element (20) which is itself carried by the support member (13) and with which it forms an assembly means (32) with controlled locking for assembly along an axis (32a) which is approximately parallel to that (15) of the translational movement of the said support member (13) during pressing,
- associated with the opposite end (24) of the said body, a plurality of elongate arms (25) which, on the one hand, are articulated in particular by way of a free end (26) of their ends (26, 27) in planes substantially radial to the longitudinal axis (22) of the body and are distributed in angular and regular manner about this axis and, on the other hand, are movable between two positions (28, 29), whereof at least one end position (28), called the pressing position, in which they extend in a plane which is approximately at right angles to their longitudinal axis (22) of the body (21), and another position (29), called the rest position, in which they extend overall parallel to the same longitudinal axis and in particular beyond the body end on which they are articulated,
- the device itself comprising at least one panel (33) which is articulated at least indirectly on the frame (14) of the machine by a means (34) intended for this purpose, along an axis (34a) which is substantially parallel to that (32a) predefined assembly axis, this panel:
- on the one hand carrying a plurality of housing means (35), each of one of the said tools (11) together with its body (21) being in a position similar to that which it has to adopt during assembly with the support member along the assembly axis (32a): the said housing means (35) have a location with respect to the articulation axis and an angular position about this axis such that by articulating the panel each of the housing means (35) can be brought opposite the support member (13) to allow a tool (11) to be deposited and/or gripped along the defined assembly axis (32a) and
- on the other hand, for this purpose being associated with at least one controlled means (36) for displacement about its articulation axis (34a), this means being indexed in such a way that it at least either, selectively, brings each of the housing means opposite the support member, or removes the panel to allow functioning of the pressing station (9),
this tool changing device being characterized in that:
- each panel which it comprises is formed by a plate in the shape of a circle sector whereof the vertex cooperates with the articulation means (34) and on which there are juxtaposed, in particular substantially in an arc, the means (35) for housing the pressing tools,
- each means for housing a tool is intended to receive a tool with its arms (25) in the rest position (29),
- the panel (33) is, on the one hand, carried by an element (37) on which it is articulated for this purpose by the means (34), along the defined articulation axis (34a), under the effect of the controlled displacement means (36) which is also defined and, on the other hand, this element (37) is not only associated with the frame (14) of the machine by a means (34) for guidance in translational movement along an axis (38a) approximately parallel to the assembly axis (32a) of the tool with the tool support member, but is also placed under the effect of a means (39) for controlled displacement along the said axis (32a), this means having an amplitude of displacement which is at least sufficient to allow both assembly with the support member (13) of any pressing tool (11) of the above-mentioned type carried by one of the housing means (35) of the panel (33) which is opposite the support member (13) and, at the end of this assembly, total disengagement of the tool (11) from the housing means (35) which was carrying it so as to allow the panel (33) to be removed from the pressing station (9).

2. Device according to Claim 1, in which each of the housing means (35) and each of the tools (11) for pressing (13), in particular in the part thereof intended to cooperate with a housing means (35), comprise complementary bearing surfaces (40 to 43) which define at least one axis, called a centring axis (44), which substantially coincides with the longitudinal axis (22) of a tool body (21), and ensure that the tool is held fast in the assembly position with the support member, this device being characterized in that each housing means (35) is associated with the panel (33) by way of at least one resilient means (45) for absorbing the displacements imposed thereon during assembly and/or deposit of a tool, that is to say the displacements resulting from any fault in positioning the said means considered with respect to the tool support member (13) and/or those which may result from a tool falling in this housing means.

3. Device according to Claim 1 or 2, characterized in that each housing means (35) comprises an overall tubular body intended to house the tool at least partly, there being arranged in this body the bearing surfaces (42, 43) which are complementary to those (40, 41) of the tool, and this body being freely engaged in a cutout (46) provided in the panel (33) and bearing on the latter by means of the resilient absorption means (45).

4. Device according to any one of Claims 1 to 3, characterized in that at least some of the arms (25) of each tool have at least one surface (40a) which, overall opposite that (40b) which has to come into contact with the material to be pressed, forms in the rest position of the arms a portion of at least one (40) of the bearing surfaces (40, 41) which the tool comprises.

5. Device according to any one of Claims 1 to 4, characterized in that on the one hand the assembly element (20) associated with the support member (13) comprises a shaft (20) whereof the opposite end (20a) has at least one bearing surface (20b, 20c) for centring and longitudinal bearing for the complementary assembly element (19) associated with the tool, this assembly element itself comprising a sleeve intended to fit over the shaft and, at its end intended to be associated with the tool, comprises on the inside at least one bearing surface (19b, 19c) which is complementary to those (20b, 20c) of the shaft, and on the other hand, the shaft (20) has at its end (20d) associated with the support member at least one means (20e) which can be expanded radially against a conical bearing surface (19e) made in the sleeve and oriented such that it induces blocking of the assembly, that is to say keeps the complementary bearing surfaces (19b, 19c, 20b, 20c) of the sleeve (19) and the shaft (20) bearing against one another.

6. Device according to Claim 5, characterized in that the means (20e) which can be expanded radially comprises on the one hand a plurality of parts (20f) bearing on the conical bearing surface (19e) of the sleeve (19), these pieces being urged energetically at least indirectly by at least one resilient member (20g) in their direction of pressing against the above-mentioned conical bearing surface (19e), and on the other hand at least one controlled driving member (20h) whereof the action is opposed to that of each resilient member (20g) so as to allow at least the withdrawal of the means (20e) which can be expanded under the action of the displacement of the tool, which tends to be produced by gravity.

7. Device according to Claims 5 or 6, characterized in that the shaft (20) comprises:
- bores (20i) arranged radially with respect to the shaft, in each of which there slides a part (20f) for bearing against the conical bearing surface (19e),
- an axial bore (20j) on the one hand, into which the radial bores (20i) open to bring the end (20k) of each bearing part (20f) opposite that (20l) cooperating with the conical bearing surface (19c) of the sleeve (19), and on the other hand which houses at least one piston (20h) which itself has:
- at least one conical bearing surface (20m) oriented to cooperate with the end (20k) of each of the bearing parts (20f) which projects into the axial bore (20j) so as to urge them in their direction of pressing against the bearing surface (19e) of the sleeve,
- at least two opposing faces (20n, 20o), whereof one, which is permanently under the effect of a resilient member (20g) so as to urge the bearing parts (20f) in their direction of pressing against the bearing surface of the sleeve (19), and the other capable of being under the effect of a pressurized fluid so as to allow the release of the same bearing parts (20f).
